# FASCICULE DE BREVET EUROPEEN

(11) **EP 2 810 858 B1**
(45) Date de publication et mention de la délivrance du brevet: **28.11.2018**
(21) Numéro de dépôt: 14305839.4
(22) Date de dépôt: 03.06.2014
(51) Int. Cl.: B62H 5/14, E05B 71/00, E05B 67/06

(54) **Dispositif antivol notamment pour motocyclette ou véhicule similaire**
Diebstahlsicherungsvorrichtung für Motorrad oder ähnliches Fahrzeug
Anti-theft device in particular for a motorcycle or similar vehicle

(30) Priorité: 03.06.2013 FR 1355032
(43) Date de publication de la demande: 10.12.2014
(73) Titulaire: Bazin, Eric, 90400 Dorans (FR)
(72) Inventeur: Bazin, Eric, 90400 Dorans (FR)
(74) Mandataire: Koelbel, Caroline

(56) Documents cités:
- WO-A1-88/09273
- DE-U1-202004 001 273
- GB-A- 2 303 598
- GB-A- 2 314 581
- US-A- 3 805 564
- US-A- 4 068 504
- US-A- 5 921 115
- US-B1- 6 434 980

## Description

### Domaine technique :

La présente invention concerne un dispositif antivol notamment pour motocyclette ou véhicule similaire selon la revendication 1. Ce dispositif antivol est amovible par rapport audit véhicule et est destiné à immobiliser au moins une roue dudit véhicule, ce dispositif comportant deux pièces distinctes agencées pour être respectivement couplées au véhicule de part et d'autre de ladite roue, pour être assemblées entre elles au travers de la jante de ladite roue et pour être verrouillées par un bloc de condamnation.

### Technique antérieure :

L'utilisation de dispositifs antivol sur une motocyclette, un « trike » sorte de motocyclette à trois roues, un « quad » véhicule à trois ou quatre roues, ou tout autre véhicule similaire motorisé ou non, pose des problèmes récurrents qui résident dans l'encombrement de l'antivol lors de son transport et dans sa vulnérabilité aux actions de tiers lors de son utilisation.

A ce jour, les seuls dispositifs antivol normalisés sont les antivols rigides en forme de U fermé par un barreau de verrouillage tels que ceux décrits dans les publications US 3,805,564 et US 5,921,115, et les antivols à chaîne ou à câble tels que ceux décrits dans les publications US 4,068,504 et DE 202004001273. Néanmoins, tous les dispositifs antivol connus sont particulièrement encombrants et ne trouvent pas nécessairement une place de rangement optimisée dans le véhicule. Ces dispositifs antivol ont l'avantage de pouvoir se positionner à divers endroits du véhicule puisqu'ils sont suffisamment larges. Toutefois, ils ne permettent pas d'être positionnés au plus proche du cadre, d'une roue ou de toute autre partie du véhicule, en vue d'empêcher l'introduction d'une pince de cisaillement ou similaire visant à sectionner l'antivol.

Un exemple d'antivol en forme de U décrit dans la publication FR-A-2 697 223 a été conçu pour se ranger dans le porte-bagage d'un véhicule, ce qui impose que le véhicule soit équipé d'un porte-bagage, ce qui n'est pas systématique en fonction du type de véhicule.

Un autre type d'antivol décrit dans la publication CN 2298994Y comporte deux brides, chacune fixée à demeure sur une des branches de la fourche avant du véhicule, et une tige de verrouillage agencée pour traverser les deux brides au travers de la jante de la roue du véhicule pour l'immobiliser. La tige de verrouillage peut être logée dans une position de rangement dans une des brides. Cette solution permet certes de faciliter le transport de l'antivol qui reste à demeure sur le véhicule, mais n'est pas optimale car elle alourdit la fourche, de manière non équilibrée, et peut être source d'accident. De plus, la tige de verrouillage positionnée latéralement sur une des branches de la fourche est dangereuse. L'antivol est par ailleurs soumis aux intempéries et aux projections de la route risquant d'endommager le bloc de condamnation.

Les publications GB 2 303 598 et US 6,434,980 décrivent des dispositifs antivol pourvus de deux pièces distinctes qui se montent à travers la jante d'une roue et se couplent au véhicule de part et d'autre de la roue. Toutefois, le verrouillage de ces dispositifs antivol nécessite un bloc de condamnation rapporté tel qu'un cadenas pouvant être facilement fractionné. De plus, ces dispositifs antivol sont encombrants donc compliqués à transporter, et leur ergonomie ne permet pas de les positionner au plus de la roue et/ou du cadre pour éviter les risques d'effraction.

### Exposé de l'invention :

La présente invention vise à pallier ces inconvénients en proposant un dispositif antivol qui répond aux normes en vigueur, dont l'encombrement en mode transport permet son rangement dans tout type de véhicule et dont la mise en oeuvre pour immobiliser un véhicule est simple, rapide, sécurisée, avec un risque d'effraction très limité voire supprimé.

Dans ce but, l'invention concerne un dispositif antivol notamment pour motocyclette ou véhicule similaire, ce dispositif antivol étant amovible par rapport audit véhicule et étant agencé pour bloquer au moins une roue dudit véhicule, ce dispositif comportant deux pièces distinctes pouvant être séparées en mode de transport agencées pour être respectivement couplées au véhicule de part et d'autre de ladite roue, pour être assemblées entre elles au travers de la jante de ladite roue et pour être verrouillées par un bloc de condamnation, tel que lesdites pièces distinctes sont agencées pour s'assembler autour et au travers d'une des roues du véhicule de manière intime pour empêcher toute tentative d'effraction et en ce que l'une desdites pièces distinctes constitue une mâchoire de blocage en forme de J pourvue d'une extrémité libre en forme de crochet et d'une tige agencée pour traverser la jante de ladite roue en position d'utilisation et terminée par un premier embout d'assemblage, et l'autre desdites pièces distinctes constitue une mâchoire de verrouillage en forme de C pourvue d'une extrémité libre en forme de crochet et d'un second embout d'assemblage agencé pour se coupler audit premier embout d'assemblage et en ce que ledit bloc de condamnation est intégré à l'embout d'assemblage de ladite mâchoire de verrouillage qui est agencée pour être disposée contre la jante à l'extérieur de la roue, et en ce que lesdites mâchoires de blocage et de verrouillage comportent à leur extrémité libre en forme de crochet une zone d'emboîtement profilée agencée pour être complémentaire à une zone de réception dudit véhicule dans laquelle elles sont crochetées ou en ce que les extrémités libres en forme de crochet desdites mâchoires de blocage et de verrouillage sont complémentaires à une zone de réception dudit véhicule autour de laquelle elles sont crochetées.

Cette construction particulière permet d'une part de positionner le dispositif antivol au plus près de la roue pour empêcher toute effraction et d'autre part de le transporter dans un encombrement réduit du véhicule.

Selon l'invention, le bloc de condamnation est intégré à l'embout d'assemblage de la mâchoire de verrouillage pour une meilleure compacité du dispositif et une optimisation du nombre de composants.
L'un quelconque dudit premier embout d'assemblage de la mâchoire de blocage ou dudit second embout d'assemblage de la mâchoire de verrouillage est un embout mâle tandis que l'autre quelconque dudit second embout d'assemblage de la mâchoire de verrouillage ou dudit premier embout d'assemblage de la mâchoire de blocage est un embout femelle complémentaire audit embout mâle.

L'embout femelle comporte avantageusement le bloc de condamnation pourvu au moins d'un organe de verrouillage mobile entre une position escamotée correspondant à une position déverrouillée et une position sortie correspondant à une position verrouillée, tandis que l'embout mâle comporte au moins un logement de verrouillage agencé pour recevoir ledit organe de verrouillage en position sortie dans ladite position verrouillée.

L'embout mâle peut comporter au moins deux logements de verrouillage successifs agencés pour définir au moins deux positions de verrouillage, chaque position de verrouillage correspondant à un empattement déterminé entre lesdites mâchoires.

Chaque logement de verrouillage peut être constitué d'une gorge s'étendant autour dudit embout mâle, tandis que chaque organe de verrouillage peut être constitué d'une bille coopérant avec un profil de came agencé pour déplacer ladite bille entre ses positions escamotée et sortie par rapport audit logement de verrouillage.

Dans la forme préférée de l'invention, l'embout mâle fait partie de ladite mâchoire de blocage et l'embout femelle pourvu dudit bloc de condamnation fait partie de ladite mâchoire de verrouillage.

Dans une des variantes de réalisation, les mâchoires de blocage et de verrouillage comportent à leur extrémité libre en forme de crochet une zone d'emboîtement profilée agencée pour être complémentaire à une zone de réception dudit véhicule dans laquelle elles sont crochetées.

Dans une autre variante de réalisation, les extrémités libres en forme de crochet desdites mâchoires de blocage et de verrouillage sont complémentaires à une zone de réception dudit véhicule autour de laquelle elles sont crochetées.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1A est une vue en plan d'un dispositif antivol selon l'invention en position ouverte, et la figure 1B est une vue en coupe selon le plan AA de la figure 1A,
- les figures 2A et 2B sont des vues similaires aux figures 1A et 1B du dispositif antivol en position fermée,
- la figure 3A est une vue en coupe selon le plan BB du détail D du dispositif antivol de la figure 1A en position ouverte, et la figure 3B est une vue en coupe selon le plan CC du dispositif de la figure 3A,
- les figures 4A et 4B sont des vues similaires aux figures 3A et 3B du dispositif antivol en position fermée,
- les figures 5 et 6 sont des vues schématiques en perspective montrant deux modes de montage différents du dispositif antivol des figures précédentes,
- la figure 7 est une vue éclatée d'une variante de réalisation d'un dispositif antivol selon l'invention, et
- les figures 8A et 8B sont des vues schématiques en perspective montrant le mode de montage du dispositif antivol de la figure 7.

### Illustrations de l'invention et différentes manières de la réaliser :

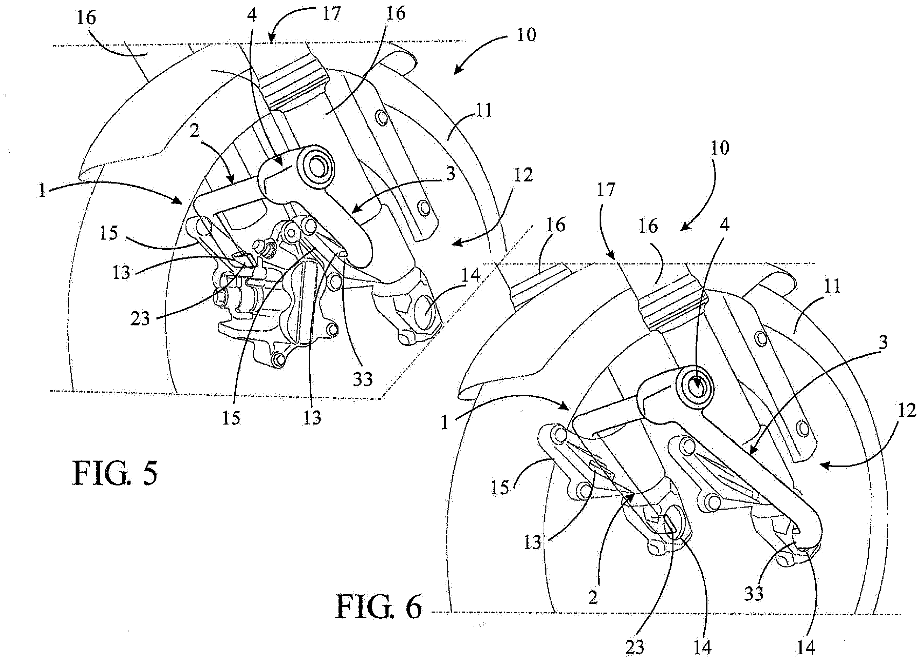

En référence aux figures, le dispositif antivol 1 selon l'invention comporte deux pièces distinctes 2, 3 formant des mâchoires agencées pour être assemblées entre elles et verrouillées par un bloc de condamnation 4 au travers d'une roue 11 d'un véhicule 10 pour bloquer cette roue en étant au plus près d'elle et empêcher tout déplacement du véhicule. Ainsi, en mode transport, les deux pièces 2 et 3 du dispositif antivol 1 peuvent être séparées pour se ranger plus facilement dans le véhicule 10, par exemple sous la selle, et en utilisation, ces deux pièces 2 et 3 peuvent s'assembler autour et au travers d'une des roues 11 du véhicule de manière intime pour empêcher toute tentative d'effraction. On entend par véhicule 10 les motocyclettes mais aussi tous les autres véhicules similaires à deux, trois ou quatre roues, motorisés ou non. Les figures 5, 6, 8A et 8B représentent schématiquement une roue de moto à titre d'exemple non limitatif pour illustrer les différents modes de montage du dispositif antivol 1, 1'.

Une des pièces du dispositif antivol 1 forme une mâchoire de blocage 2 constituée d'une barre métallique en forme de J pourvue d'une extrémité libre en forme de crochet 20 à angle fermé reliée par un coude à une tige 21 droite et allongée destinée à traverser la jante 12 d'une roue 11, et terminée par un premier embout d'assemblage 22. L'autre pièce du dispositif antivol 1 forme une mâchoire de verrouillage 3 constituée d'une barre métallique en forme de C pourvue d'une extrémité libre en forme de crochet 30 à angle fermé reliée par un coude à un second embout d'assemblage 32 situé dans l'axe de la tige 21 pour se coupler au premier embout d'assemblage 22. Ces pièces sont généralement réalisées dans un acier durci par exemple cémenté répondant aux normes en vigueur concernant notamment la résistance au sciage, au cisaillement, la résistance à la corrosion, la résistance à la traction.

Selon l'invention, le bloc de condamnation 4 est intégré à l'embout d'assemblage 31 de la mâchoire de verrouillage 3 qui est destinée à être disposée contre la jante 12 à l'extérieur de la roue 11 comme expliqué plus loin. Dans des variantes de réalisation non représentées, qui ne font pas partie de l'invention, ce bloc de condamnation 4 pourrait être constitué d'une pièce séparée et rapportée sur les embouts assemblés desdites mâchoires ou constitué de deux parties complémentaires respectivement intégrées aux embouts d'assemblage 22, 32 des mâchoires 2, 3.

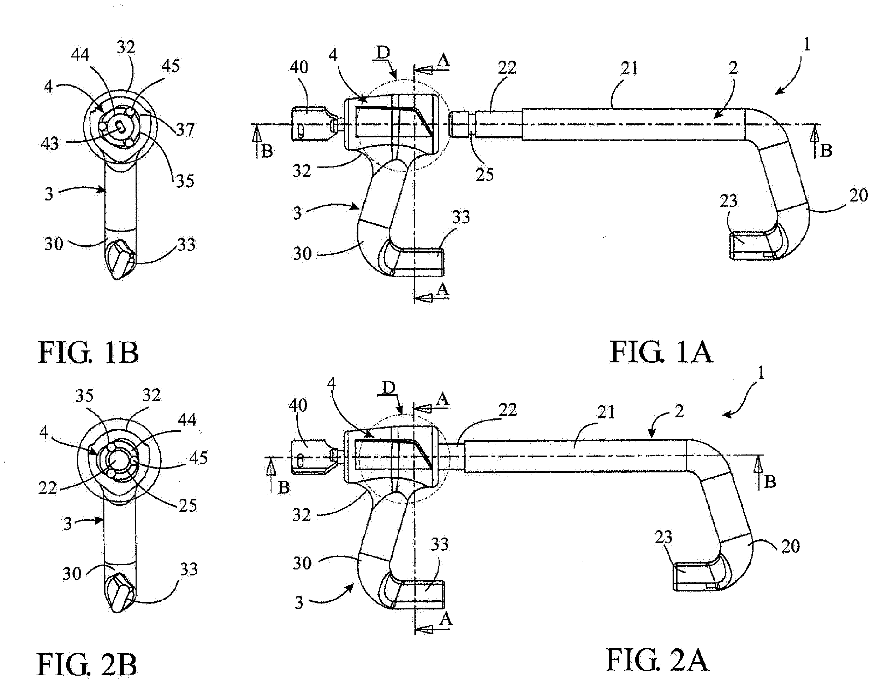

Dans l'exemple illustré aux figures 1 à 6, les mâchoires de blocage 2 et de verrouillage 3 comportent chacune à leur extrémité libre en forme de crochet 20, 30 une zone d'emboîtement 23, 33 spécialement profilée pour être complémentaire à une zone de réception 13, 14 fixe existante sur le véhicule 10 et dans laquelle elles se crochètent. En référence à la figure 5, la zone de réception correspond à un évidement 13 existant dans les supports d'étrier de frein 15 fixés sur les branches 16 de la fourche 17 portant la roue 11. En référence à la figure 6, la zone de réception correspond à un alésage 14 existant à la base des branches 16 de la fourche 17 portant la roue 11 dans l'axe de ladite roue. Bien entendu, ces zones de réception 13, 14 peuvent être situées à d'autres endroits selon le véhicule 10 considéré. Dans ce cas, les formes et dimensions des zones d'emboîtement 23, 33 prévues à l'extrémité libre en crochet 20, 30 des mâchoires 2, 3 sont adaptées aux formes et dimensions des zones de réception 13, 14 dudit véhicule 10.

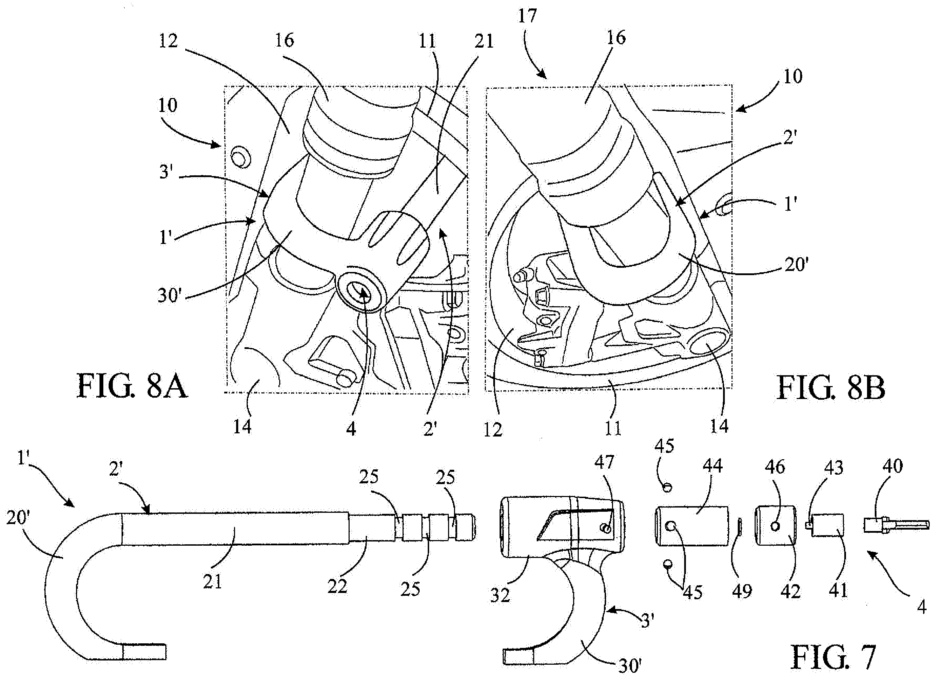

A ce sujet, les figures 8A et 8B illustrent un autre exemple de montage d'un dispositif antivol 1' selon l'invention qui diffère légèrement de celui décrit précédemment. Les parties identiques à l'exemple précédent portent les mêmes numéros de référence. Dans cette variante de réalisation, les extrémités libres en crochet 20', 30' des mâchoires de blocage 2' et de verrouillage 3' sont arrondies suivant un rayon de courbure sensiblement égal à celui des branches 16 de la fourche 17 portant une roue 11 d'un véhicule 10 de manière à pouvoir se crocheter autour desdites branches 16. La figure 8A illustre schématiquement une première branche 16 de la fourche 17 située d'un côté de la roue 11 autour de laquelle est accrochée l'extrémité libre en crochet 30' de la mâchoire de verrouillage 3, tandis que la figure 8B illustre schématiquement la seconde branche 16 de la même fourche 17 située de l'autre côté de la roue 11 autour de laquelle est accrochée l'extrémité libre en crochet 20' de la mâchoire de blocage 2'.

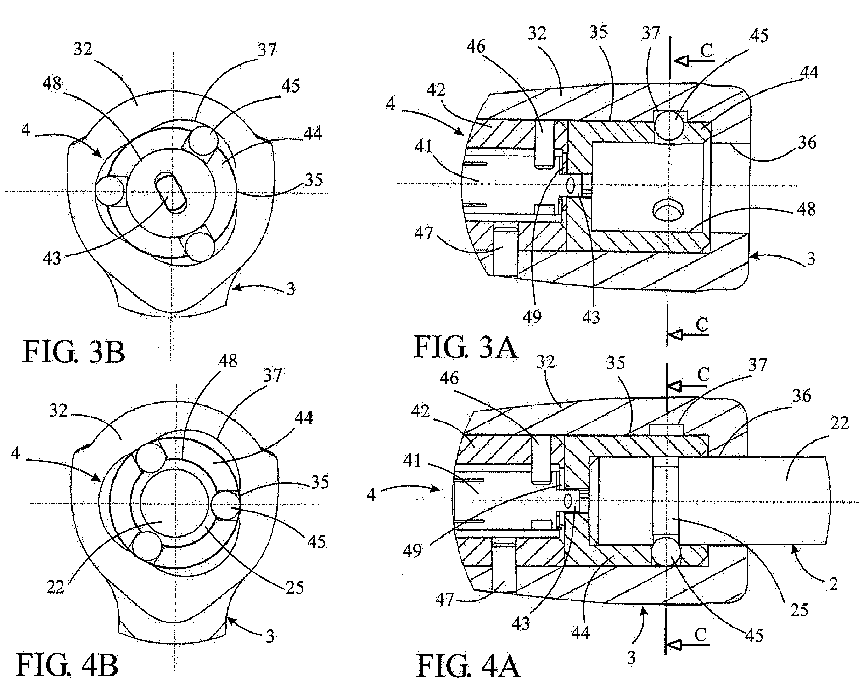

Le bloc de condamnation 4 intégré dans l'embout d'assemblage 32 de la mâchoire de verrouillage 3, 3' est représenté en vue éclatée à la figure 7 et en coupe axiale et transversale aux figures 3A, 3B et 4A, 4B respectivement dans ses positions déverrouillée et verrouillée. Ce bloc de condamnation 4 est logé dans un alésage central 35 ménagé dans l'embout d'assemblage 32 et prolongé par un orifice de réception 36 destiné à recevoir l'embout d'assemblage 22 de la mâchoire de blocage 2, 2'. Ainsi l'embout d'assemblage 22 est un embout mâle complémentaire à l'embout d'assemblage 32 qui est un embout femelle.

Le bloc de condamnation 4 comporte dans l'exemple représenté une clé 40 amovible pour commander en rotation un barillet de serrure 41 guidé en rotation et bloqué axialement dans une douille de serrure 42 par l'intermédiaire d'une première goupille 46, la douille de serrure 42 étant quant à elle fixe en rotation dans l'embout d'assemblage 32 par une seconde goupille 47. Le barillet de serrure 41 commande par son tenon central plat 43 la rotation d'une came à billes 44 dans ledit alésage central 35. Cet alésage central 35 comporte, dans l'exemple représenté, trois profils de came 37 en creux équidistants pour coopérer avec trois billes 45 portées par la came à billes 44. La rotation de la came à billes 44 provoque le déplacement des billes 45 entre une position escamotée (fig. 3A et 3B) correspondant à la position déverrouillée du dispositif antivol 1, 1' et une position sortie (fig. 4A et 4B) correspondant à sa position verrouillée. A cet effet, l'embout d'assemblage 22 de la mâchoire de blocage 2, 2' comporte au moins une gorge de verrouillage 25 disposée en regard des billes 45 lorsqu'il est introduit dans l'embout d'assemblage 32 à l'intérieur de l'orifice de réception 36 et à l'intérieur d'un évidement central 48 prévu dans la came à billes 44. La rotation de la came à billes 44 peut être limitée par exemple à 180° par une rondelle 49 limiteur de course emboîtée sur le tenon central plat 43 et coopérant avec des butées radiales prévues sur la douille de serrure 42. Bien entendu toute autre forme de bloc de condamnation 4 peut convenir, aussi bien mécanique à l'aide d'une clé 40 qu'électronique à l'aide d'une carte magnétique avec ou sans contact.

Dans la variante de réalisation illustrée à la figure 7, l'embout d'assemblage 22 comporte trois gorges de verrouillage 25 successives et séparées d'un pas régulier pour déterminer trois positions de verrouillage possibles afin d'ajuster l'empattement du dispositif antivol 1' à la roue 11 du véhicule 10 à sécuriser de manière à pouvoir disposer ledit dispositif antivol 1 ' au plus près de la roue 11 dudit véhicule.

### Possibilités d'application industrielle :

Il ressort clairement de cette description que l'invention permet d'atteindre les buts fixés, à savoir un dispositif antivol 1, 1' très compact, facile à ranger puisque les deux mâchoires sont détachables et rapide à mettre en place de part et d'autre d'une roue d'un véhicule en épousant pratiquement ladite roue, ceci empêchant toute tentative d'effraction. Les essais ont démontré qu'une tentative de destruction de ce dispositif antivol aurait pour conséquence l'endommagement voire la destruction d'une partie du véhicule et non du dispositif antivol.

La présente invention n'est bien entendu pas limitée aux exemples de réalisation décrits mais s'étend à toute modification et variante évidentes pour un homme du métier tout en restant dans l'étendue de la protection définie dans les revendications annexées.

## Revendications

1. Dispositif antivol (1, 1') notamment pour motocyclette ou véhicule (10) similaire, ce dispositif antivol étant amovible par rapport audit véhicule (10) et étant agencé pour bloquer au moins une roue (11) dudit véhicule, ce dispositif comportant deux pièces (2, 3 ; 2', 3') distinctes pouvant être séparées en mode de transport agencées pour être respectivement couplées au véhicule (10) de part et d'autre de ladite roue (11), pour être assemblées entre elles au travers de la jante (12) de ladite roue (11) et pour être verrouillées par un bloc de condamnation (4), tel que lesdites pièces distinctes (2, 3 ; 2', 3') sont agencées pour s'assembler autour et au travers d'une des roues (11) du véhicule de manière intime pour empêcher toute tentative d'effraction et en ce que l'une desdites pièces distinctes constitue une mâchoire de blocage (2, 2') en forme de J pourvue d'une extrémité libre en forme de crochet (20, 20') et d'une tige (21) agencée pour traverser la jante (12) de ladite roue (11) en position d'utilisation et terminée par un premier embout d'assemblage (22), et l'autre desdites pièces distinctes constitue une mâchoire de verrouillage (3, 3') en forme de C pourvue d'une extrémité libre en forme de crochet (30, 30') et d'un second embout d'assemblage (32) agencé pour se coupler audit premier embout d'assemblage (22) et en ce que ledit bloc de condamnation (4) est intégré à l'embout d'assemblage (32) de ladite mâchoire de verrouillage (3, 3') qui est agencée pour être disposée contre la jante (12) à l'extérieur de la roue (11), et en ce que lesdites mâchoires de blocage (2) et de verrouillage (3) comportent à leur extrémité libre en forme de crochet (20, 30) une zone d'emboîtement profilée (23, 33) agencée pour être complémentaire à une zone de réception (13, 14) dudit véhicule (10) dans laquelle elles sont crochetées ou en ce que les extrémités libres en forme de crochet (20', 30') desdites mâchoires de blocage (2') et de verrouillage (3') sont complémentaires à une zone de réception (16) dudit véhicule (10) autour de laquelle elles sont crochetées.

2. Dispositif antivol selon la revendication 1, **caractérisé en ce que** l'un quelconque dudit premier embout d'assemblage (22) de la mâchoire de blocage (2, 2') ou dudit second embout d'assemblage (32) de la mâchoire de verrouillage (3, 3') est un embout mâle et l'autre quelconque dudit second embout d'assemblage (32) de la mâchoire de verrouillage (3, 3') ou dudit premier embout d'assemblage (22) de la mâchoire de blocage (2, 2') est un embout femelle complémentaire audit embout mâle.

3. Dispositif antivol selon la revendication 2, **caractérisé en ce que** ledit embout femelle (32) comporte ledit bloc de condamnation (4) pourvu au moins d'un organe de verrouillage (45) mobile entre une position escamotée correspondant à une position déverrouillée et une position sortie correspondant à une position verrouillée, et **en ce que** ledit embout mâle (22) comporte au moins un logement de verrouillage (25) agencé pour recevoir ledit organe de verrouillage (45) en position sortie dans ladite position verrouillée.

4. Dispositif antivol selon la revendication 3, **caractérisé en ce que** ledit embout mâle (22) comporte au moins deux logements de verrouillage (25) successifs agencés pour définir au moins deux positions de verrouillage, chaque position de verrouillage correspondant à un empattement déterminé entre lesdites mâchoires (2, 3 ; 2', 3').

5. Dispositif antivol selon l'une quelconque des revendications 3 ou 4, **caractérisé en ce que** chaque logement de verrouillage est constitué d'une gorge (25) s'étendant autour dudit embout mâle (22).

6. Dispositif antivol selon l'une quelconque des revendications 3 ou 4, **caractérisé en ce que** chaque organe de verrouillage est constitué d'une bille (45) coopérant avec un profil de came (37) agencé pour déplacer ladite bille entre ses positions escamotée et sortie par rapport audit logement de verrouillage (25).

7. Dispositif antivol selon l'une quelconque des revendications 3 à 6 **caractérisé en ce que** l'embout mâle (22) fait partie de ladite mâchoire de blocage (2, 2') et l'embout femelle (32) pourvu dudit bloc de condamnation (4) fait partie de ladite mâchoire de verrouillage (3, 3').

## Patentansprüche

1. Diebstahlsicherungsvorrichtung (1, 1'), insbesondere für Motorrad oder ähnliches Fahrzeug (10), wobei diese Diebstahlsicherungsvorrichtung in Bezug auf besagtes Fahrzeug (10) abnehmbar ist und ausgelegt ist, um zumindest ein Rad (11) von besagtem Fahrzeug zu blockieren, wobei diese Vorrichtung zwei separate Teile (2, 3 ; 2', 3') beträgt, die für den Transport getrennt werden können und ausgelegt sind, um jeweils auf einer Seite von besagtem Rad (11) an Fahrzeug (10) angekoppelt zu werden, um durch die Felge (12) von besagtem Rad (11) hindurch miteinander verbunden zu werden und um durch einen Verriegelungsblock (4) verriegelt zu werden, so dass besagte separate Teile (2, 3 ; 2', 3') ausgelegt sind, um eng um und durch eines der Räder (11) des Fahrzeugs hindurch miteinander verbunden zu werden, um jeden Zerstörungsversuch zu verhindern und dadurch, dass eines von besagten separaten Teilen eine J-förmige Klemmbacke (2, 2') bildet, mit einem hakenförmigen freien Ende (20, 20') und einer Stange (21), die ausgelegt ist, um in Benutzungsposition durch Felge (12) von besagtem Rad (11) zu dringen und mit einem ersten Verbindungsstück (22) endet, und das andere von besagten separaten Teilen eine C-förmige Verriegelungsbacke (3, 3') bildet, mit einem hakenförmigen freien Ende (30, 30') und einem zweiten Verbindungsstück (32), ausgelegt um mit besagtem ersten Verbindungsstück (22) gekoppelt zu werden, und dadurch, dass besagter Verriegelungsblock (4) in Verbindungsstück (32) von besagter Verriegelungsbacke (3, 3') integriert ist, welche ausgelegt ist, um gegen Felge (12) außerhalb von Rad (11) angeordnet zu werden, und dadurch, das besagte Klemmbacke (2) und besagte Verriegelungsbacke (3) an ihrem hakenförmigen freien Ende (20, 30) einen profilierten Einfügebereich (23, 33) aufweisen, der ausgelegt ist, um zu einem Aufnahmebereich (13, 14) von besagtem Fahrzeug (10), in dem sie eingehängt sind, komplementär zu sein oder dadurch, dass die hakenförmigen freien Enden (20', 30') von besagter Klemmbacke (2') und besagter Verriegelungsbacke (3') zu einem Aufnahmebereich (16) von besagtem Fahrzeug (10), um den sie eingehängt sind, komplementär sind.

2. Diebstahlsicherungsvorrichtung nach Anspruch 1, **dadurch gekennzeichnet, dass** ein beliebiges von besagtem ersten Verbindungsstück (22) von Klemmbacke (2, 2') oder von besagtem zweiten Verbindungsstück (32) von Verriegelungsbacke (3, 3') ein männlicher Stecker ist und das andere von besagtem zweiten Verbindungsstück (32) von Verriegelungsbacke (3, 3') oder von besagtem ersten Verbindungsstück (22) von Klemmbacke (2, 2') eine zu besagtem männlichen Stecker komplementäre Buchse ist.

3. Diebstahlsicherungsvorrichtung nach Anspruch 2, **dadurch gekennzeichnet, dass** besagte Buchse (32) besagten Verriegelungsblock (4) beträgt, der mit zumindest einem zwischen einer eingefahrenen Stellung, die einer entriegelten Position entspricht, und einer ausgefahrenen Stellung, die einer verriegelten Position entspricht, beweglichen Verriegelungselement (45) versehen ist, und dadurch, dass besagter Stecker (22) zumindest eine Verriegelungsaufnahme (25) aufweist, die ausgelegt ist, um besagtes Verriegelungselement (45) in ausgefahrener Stellung in besagter verriegelten Position aufzunehmen.

4. Diebstahlsicherungsvorrichtung nach Anspruch 3, **dadurch gekennzeichnet, dass** besagter Stecker (22) zumindest zwei aufeinander folgende Verriegelungsaufnahmen (25) beträgt, die ausgelegt sind, um zumindest zwei Verriegelungspositionen zu bestimmen, wobei jede Verriegelungsposition einem bestimmten Abstand zwischen besagten Backen (2, 3 ; 2', 3') entspricht.

5. Diebstahlsicherungsvorrichtung nach einem beliebigen der Ansprüche 3 oder 4, **dadurch gekennzeichnet, dass** jede Verriegelungsaufnahme aus einer Nut (25) besteht, die sich um besagten Stecker (22) herum erstreckt.

6. Diebstahlsicherungsvorrichtung nach einem beliebigen der Ansprüche 3 oder 4, **dadurch gekennzeichnet, dass** jedes Verriegelungselement aus einer Kugel (45) besteht, die mit einer Nockenkonturfläche (37) zusammen arbeitet, die ausgelegt ist, um besagte Kugel zwischen ihrer eingefahrenen und ausgefahrenen Stellung in Bezug auf besagte Verriegelungsaufnahme (25) zu bewegen.

7. Diebstahlsicherungsvorrichtung nach einem beliebigen der Ansprüche 3 bis 6, **dadurch gekennzeichnet, dass** Stecker (22) Teil von besagter Klemmbacke (2, 2') ist und die mit besagtem Verriegelungsblock (4) versehene Buchse (32) Teil von besagter Verriegelungsbacke (3, 3') ist.

## Claims

1. Anti-theft device (1, 1') in particular for a motorcycle or a similar vehicle (10), this anti-theft device being removable with respect to said vehicle (10) and arranged to block at least one wheel (11) of said vehicle, this device comprising two separate parts (2, 3 ; 2', 3') that can be separated in transport mode, arranged to be respectively coupled to vehicle (10) on both sides of said wheel (11), to be assembled together through rim (12) of said wheel (11) and to be locked by a locking block (4), so that said separate parts (2, 3 ; 2', 3') are arranged to be closely assembled together around and through one of wheels (11) of the vehicle so as to prevent any burglary attempt and in that one of said different parts forms a J-shaped blocking jaw (2, 2') provided with a hook-shaped free end (20, 20') and a rod (21) arranged to pass through rim (12) of said wheel (11) in operating position and ending with a first joining piece (22), and the other of said separate parts forms a C-shaped locking jaw (3, 3') provided with a hook-shaped free end (30, 30') and a second joining piece (32) arranged to be coupled to said first joining piece (22) and in that said locking block (4) is integrated in joining piece (32) of said locking jaw (3, 3'), which is arranged to be positioned against rim (12) outside of wheel (11), and in that said blocking (2) and locking (3) jaws comprise at their hook-shaped free end (20, 30) a profiled fitting zone (23, 33) arranged to be complementary to a receiving zone (13, 14) of said vehicle (10), to which they are attached, or in that the hook-shaped free ends (20', 30') of said blocking (2') and locking (3') jaws are complementary to a receiving zone (16) of said vehicle (10), around which they are attached.

2. Anti-theft device according to claim 1, **characterized in that** any of said first joining piece (22) of blocking jaw (2, 2') or said second joining piece (32) of locking jaw (3, 3') is a male end piece and the other any of said second joining piece (32) of locking jaw (3, 3') or said first joining piece (22) of blocking jaw (2, 2') is a female end piece complementary to said male end piece.

3. Anti-theft device according to claim 2, **characterized in that** said female end piece (32) comprises said locking block (4) provided with at least one locking element (45) movable between a retracted position that corresponds to an unlocked position and an extended position that corresponds to a locked position, and **in that** said male end piece (22) comprises at last one locking recess (25) arranged to receive said locking element (45) in extended position in said locking position.

4. Anti-theft device according to claim 3, **characterized in that** said male end piece (22) comprises at least two successive locking recesses (25) arranged to define at least two locking positions, each locking position corresponding to a determined distance between said jaws (2, 3 ; 2', 3').

5. Anti-theft device according to any of claims 3 or 4, **characterized in that** each locking recess is made of a groove (25) extending around said male end piece (22).

6. Anti-theft device according to any of claims 3 or 4, **characterized in that** each locking element is made of a ball (45) that cooperates with a cam profile (37) arranged to move said ball between its retracted and extended positions with respect to said locking recess (25).

7. Anti-theft device according to any of claims 3 to 6, **characterized in that** male end piece (22) is a part of said blocking jaw (2, 2') and female end piece (32) provided with said locking block (4) is a part of said locking jaw (3, 3').
